# EUROPEAN PATENT APPLICATION

(11) **EP 2 186 852 A1**
(43) Date of publication of application: **19.05.2010**
(21) Application number: 09175810.2
(22) Date of filing: 12.11.2009
(51) Int. Cl.: C08J 11/06

(54) **Method for the production of a composite material by means of residuals from the manufacture of plastic laminates**

(30) Priority: 13.11.2008 IT TO20080837
(71) Applicant: ABET LAMINATI S.p.A., I-12042 Bra (Cuneo) (IT)
(72) Inventor: Scarzello, SABINO, 12042, BRA (CN) (IT)
(74) Representative: Robba, Pierpaolo

(57) **Abstract**

There is provided a method for the production of a composite thermoformable material substantially consisting of ground thermoplastic resins and decorative plastic laminates, arrived at the end of their life cycle, and of ground scraps and/or residues from the manufacture and working of decorative plastic laminates substantially composed of cellulose impregnated with thermosetting resins. The method also uses, as raw materials, ground scraps and/or residues from the production and/or the subsequent working of the composite material itself. In order to control the degradation of some mechanical properties of the material, the thermoplastic resin is mainly composed of regenerated, i.e. recycled, thermoplastic resin.
100:
GRINDING RESIDUES OF DECORATIVE PLASTIC LAMINATES TO A POWDER
101:
GRINDING RESIDUES OF THE COMPOSITE MATERIAL TO GRAINS
102:
SEPARATING INORGANIC IMPURITIES
103:
MIXING THE GRAINS WITH VIRGIN AND/OR REGENERATED RESIN
104:
HOMOGENISING THE MIXTURE
105:
HEATING AND REACTING THE MIXTURE
106:
FORMING SEMIFINISHED ARTICLES BY EXTRUSION AND COOLING

## Description

### Technical field

The present invention generally relates to the recycling of working scraps and/or residues of plastic materials, and more particularly if concerns a method for the production of a thermoformable composite material by using the so-called decorative plastic laminates (or HPL, high pressure laminates) arrived at the end of their life cycle, and/or scraps and/or residues from the manufacture of said decorative plastic laminates.

### Prior art

Such a material and the method for its production are known from EP 0 395 128 in the name of the Applicant.

According to this document, such scraps and/or residues, essentially consisting of cellulose impregnated with thermosetting resins, are ground so as to obtain a fine powder and are mixed with a thermoplastic resin, at temperatures in the range 130 to 260°C. The thermoplastic resin is present in a percentage of at least 20% to 60% by weight of the whole mixture. A semifinished product, e.g. in form of sheets, is obtained from the mixture by extrusion, and it can in turn be worked to form final products used in a great variety of fields (e.g. for internal parts or linings of motor vehicles, panels for building industry, frames of chairs and the like, packages, containers of different kinds, components for household appliances, etc.).

The method and the material allow eliminating or considerably reducing the problems of pollution and costs related to the need to dispose the scraps and/or residues from the manufacture and working of said laminates, and are consequently advantageous from the ecological standpoint.

Yet, also the production of the semifinished product and its subsequent working to obtain the final products originate scraps and/or residues (for instance, faulty sheets or offcuts), which give rise to problems similar to those solved by the method according to the above mentioned patent.

In order to alleviate also those problems, it has already been proposed to reintroduce the scraps and/or residues of the composite material itself into the production cycle, after having ground and mixed them with the raw materials (thermoplastic resin and powder of HPL laminates). Investigations and experiments have been performed in order to determine which percentages of such recycled material (hereinafter referred to as "reground material") could be mixed with the raw materials. Yet, it has been realised that, even by using the optimum percentages of reground material, a certain degradation of some mechanical properties of the material occurs, in particular a decrease in the resilience ("Charpy"), what limits the possibilities of application.

### Description of the invention

Further investigations and experiments carried out by the Applicant have led to the surprising result that this drawback can be obviated by wholly or in part replacing the synthetic resin with synthetic resin recycled from scraps from industrial working and/or plastics obtained from post-consumption recycling, e.g. after industrial consumption.

Thus, it is an object of the present invention to provide a method for the production of a thermoformable composite material essentially consisting of thermoplastic resin and/or ground scraps and/or residues of decorative plastic laminates, which method also allows reusing the scraps and/or residues of the same composite material, without a degradation of its characteristics.

According to the invention, this is achieved in that, in the mixture comprising finely ground scraps and/or residues of decorative plastic laminates, coarsely ground scraps and/or residues of the thermoformable composite material, and thermoplastic resin, the scraps and/or residues of the thermoformable composite material are present in an amount ranging from 15% to 60%, and at least most of the thermoplastic resin consists of recycled thermoplastic resin.

Actually, it has turned out that use of recycled resin (hereinafter also referred to as "regenerated resin"), in alternative or in addition to virgin resin, in the process according to EP 0 395 128 B1 (hence, without the use of residues and/or scraps of the composite material), causes a decrease in the modulus of elasticity in bending and at the same time an increase in the resilience ("Charpy").

The combined use of reground material and regenerated resin allows therefore obviating the modification of the mechanical properties of the thermoplastic composite material which would result from using only one of both materials. Indeed, use of the regenerated resin only in combination with the laminate powder would result in the degradation of the modulus of elasticity, whereas use of reground material compensates the loss of rigidity. Conversely, use of reground material would result in the degradation of the resilience, which is restored by the addition of regenerated resin. In short, the synergy between both such constituents allows producing articles of a thermoformable composite material whose mechanical properties are comparable to those of the composite material produced without using the reground material and the regenerated resin.

### Brief Description of the Figures

The invention will now be described in greater detail with reference to the accompanying drawings, given by way of non limiting example, in which:
- Fig. 1 is a flow chart of the method of the invention; and
- Fig. 2 is a diagram of a plant for carrying out the method.

### Description of a Preferred Embodiment

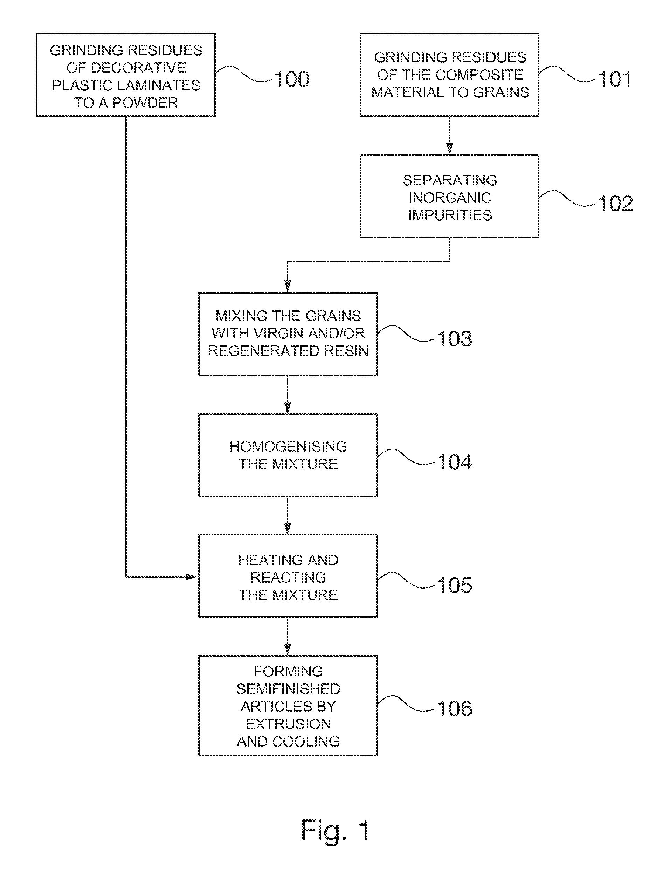

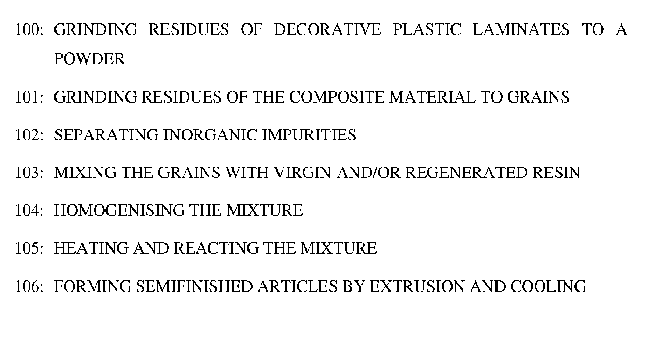

Referring to Fig. 1, steps 100 and 101 are the grinding of scraps and/or residues from the manufacture and working of the decorative plastic laminates (HPL's), and the grinding of scraps and/or residues from the manufacture and working of composite material obtained according to the teaching of EP 0 395 128 B1 and/or of the same composite material obtained according to the invention, as well as of articles made of said composite material and arrived at the end of their life cycle.

The grinding operations of step 100 are substantially identical to those of the prior art method, and result in a fine powder with grain size smaller than 4 mm, preferably an average grain size of 0.3 mm

In an exemplary embodiment of the invention, 70% of the grains had a grain size lower than 0.1 mm, and 30% had a grain size in the range 0.1 to 0.3 mm.

Step 101 results on the contrary in coarser grains, with a grain size lower than about 10 mm and preferably with an average grain size of 5 mm. The reason for such a different grain size is that most of the grains of reground material are obtained from thermoplastic resin (the thermosetting resin originally present in the HPL's is present in already finely ground form in the composite material), which melts during the subsequent heating and hence does not require a fine grinding. On the contrary, the thermosetting resin from HPL scraps does not melt during the heating step, and hence it requires a fine grinding in order to avoid clotting.

The regrinding of the recycled composite material is followed (step 102) by a step of separation of possible inorganic impurities, generally metallic impurities, present in the grain mass. Such operation is related with two key factors of the production process, which are indispensable in respect of both the possibility of processing the reground material (in order to avoid damages to the different parts of the extrusion plant, should such parts come in contact with metal particles), and the prevention of contamination of the final sheet of the thermoplastic composite material. In this manner, the amount of unusable scraps is reduced and at the same time the quality of the scraps that are molten again in order to produce fresh composite material is improved.

The grains of composite material and the thermoplastic resin are then mixed at step 103. According to the invention, the thermoplastic resin introduced into the mixture mainly consists of thermoplastic resin recycled from scraps from industrial working and/or from plastics obtained from post-consumption, e.g. industrial consumption, recycling,. The resin is preferably a resin or a mixture of resins selected in the polyolefin group, for instance polyethylene, polypropylene, etc.

Besides the basic constituents, the mixture can also contain additives, as disclosed in EP 0 395 128 B1.

In the mixture, the fine powder is present in a percentage from 20% to 50%, the grains of reground material are present in a percentage from 15% to 60% and the thermoplastic resin is present in a percentage from 30% to 60% (percentages by weight of the mixture). Most of the resin, preferably at least 70%, or substantially all of the resin, consists of regenerated resin.

The mixing and the homogenisation (step 104) can take place for instance within a screw conveyor.

Thereafter, the mixture is heated (step 105), at a temperature in the range 160 to 250°C depending on the resin being used, in order to make the mixture components react. What has been stated in EP 0 395 128 B1 in respect of the reactions taking place during heating applies also to the present invention.

In final step 106, the formation of semifinished articles, for instance sheets, takes place by extrusion and simultaneous cooling of the extruded composite material. The mixing and the reaction of step 105 take place during extrusion.

Preferably, the fine HPL powder obtained at step 100 is directly introduced into the extruder at step 105.

According to the invention, the ratio between thermoplastic resin, scraps of HPL's and composite material, and additives can change depending on the mechanical, physical, aesthetical and cost characteristics of the final material, as well as on the kind of thermoplastic resin used and on the kind of additives possibly introduced.

In any case, thermoplastic resin amounts to at least 30%, and preferably to about 35% to about 50% by weight of the material.

The percentage range indicated for the reground material is the range that, according to the experiments performed, keeps the degradation of the properties of the material limited when the reground material is used alone (that is, without regenerated resin) in addition to the raw materials of the prior art method.

As far as the regenerated resin is concerned, it causes variations of the characteristics of the composite material opposite to those caused by the reground material, as said above, and the joint presence of the reground material and the regenerated resin in the mixture, in the percentages indicated, results in a mutual compensation of the variations of opposite sign in the properties of the product. Yet, in using the regenerated resin, it is to be taken into account that difficulties can arise in mixing it with the other basic constituents (virgin resin, fine HPL powder, reground material), since the regenerated resin, coming from different industrial fields, has different physical-chemical characteristics depending on the kind of additives contained therein. In particular, it is to be taken into account that in any case the regenerated resin has an MFI (Melt Flow Index) value other than that of the virgin resin. In order the regenerated resin can be mixed in the molten mass without compromising the overall characteristics of the resulting thermoplastic composite material and without giving rise to flow irregularities phenomena at the exit from the extruder, which phenomena would entail a number of qualitative problems related with the surface aspect with a consequent yield reduction, it is necessary to meet certain MFI values (in particular, an MFI in the range 3 to 9 g/10'). As the tests performed by the Applicant have shown, this is achieved by adding regenerated resin in a percentage of at least 70%, or by using substantially regenerated resin only.

Fig. 2 shows the plant used for carrying out the method.

Reference numerals 1 - 5, 12 - 16 and 18 - 24 denote elements identified by the same reference numerals in Fig. 1 of EP 0 395 128 B1. Since their functions are kept unchanged in the present invention, they will be merely listed here and the prior art document is referred to for further details. More precisely: reference numeral 1 denotes a mill, for instance a hammer mill, finely grinding the HPL scraps and/or residues; 2 denotes a screen with recirculation 3 towards the mill; 5 denotes an accumulating hopper for ground HPL powder 4; 12a, 12b, 13, 14 denote gravimetric dosers for the regenerated resin (12a), the virgin resin (12b), the additives (13) and the HPL powder (14), respectively; 18 denotes a hopper for supplying extruder 16 with the HPL powder; 20 denotes a degassing opening for the extruder; 21 denotes a die; 22 denotes a compacting calender; and 23 and 24 denote cooling and cutting stations, respectively.

Besides those elements, the plant includes the elements necessary for producing the reground material and supplying extruder 16 with it. In particular, a second mill 31, followed by a grid 32, will be provided for chopping the scraps and/or residues of composite material to a grain size smaller than 10 mm, preferably an average grain size of the order of about 5 mm. Taking into account the greater grain size with respect to the fine HPL powder, chopping mill 31 could be for instance a blade mill. A certain amount of heat is generated also in mill 31 and such heat eliminates at least in part the humidity possibly present in the material.

The composite material reground and conditioned in this manner is fed to a magnetic separator 36 for removal of inorganic, in particular metallic, impurities. The purified reground material 34 is then accumulated in a hopper 35, whence it is fed to the mixing stage through a further gravimetric doser 44. The latter feeds for instance a screw conveyor 33 where homogenisation takes place and then the same hopper 19 receiving the mixture of resin, additives and reground material to be fed to extruder 16 (which in this case operates at temperatures in the range 160 to 250°C). Advantageously, said reground material can also contain scraps and residues from the working of the composite material itself, for instance obtained by cutting the selvages by means of suitable shears in cooling zone 23.

In conclusion, the simultaneous use of the reground material and the regenerated resin in percentages suitably determined as a result of characterisation tests, industrial experiments and analytic reprocessing, allows obtaining a "polymeric mix" (made up of regenerated thermoplastic resin, possibly virgin thermoplastic resin, fine powder from scraps of HPL laminates, and reground thermoplastic composite material), with a high capability of being processed by extrusion to provide sheets or other semifinished articles of a thermoformable material with good technical characteristics. Such characteristics are wholly comparable to those attainable by using only virgin thermoplastic resin and fine powder from scraps of HPL laminates, and hence they allow using the articles for different industrial applications. Moreover, the invention gives the advantage of reducing the scraps and residues inherent in the production and working of the material manufactured according to the prior art method, and of contributing to recycling articles of plastics in general, with an ecologically advantageous result.

It is clear that the above description has been given only by way of non-limiting example and that changes and modifications are possible without departing from the scope of the invention.

## Claims

1. Method for the production of a composite thermoformable material substantially consisting of thermoplastic resins and decorative plastic laminates substantially composed of cellulose impregnated with thermosetting resins, the method comprising the steps of:
- grinding said decorative plastic laminates until obtaining a fine powder;
- grinding the composite material itself and/or a composite thermoformable material substantially consisting of thermoplastic resins and decorative plastic laminates substantially composed of cellulose impregnated with thermosetting resins, until obtaining grains of composite material having dimensions of about one order of magnitude larger than those of said fine powder;
- preparing a mixture containing said fine powder, said grains and a thermoplastic resin, wherein said thermoplastic resin represents at least from 35% to 50% by weight of the mixture;
- heating said mixture up to a temperature comprised between 160 and 250 °C in an extruder;
- obtaining semifinished articles by extruding the mixture and simultaneously cooling the extruded material;
**characterized in that**:
- said powder and said grains are present in the mixture in a quantity comprised between 20 % and 50 % - powder - and between 15 % and 60 % - grains - by weight of the mixture, respectively; and
- at least most of the thermoplastic resin is composed of recycled resin coming from scraps of industrial processing and/or from heterogeneous plastic materials coming from the post-consumption recycling of plastic refuses, the remaining portion, if any, being thermoplastic virgin resin.

2. Method according to claim 1, **characterized in that** said decorative plastic laminates finely ground comprise decorative plastic laminates at the end of their life cycle and/or scraps and/or residues of manufacturing and/or processing of plastic laminates substantially composed of cellulose impregnated with thermosetting resins, and **in that** said coarsely ground composite materials are composed of residues and/or scraps of manufacturing and/or processing of the composite material itself and/or of composite thermoformable material substantially consisting of thermoplastic resins and of ground scraps and/or residues of manufacturing and/or processing of decorative plastic laminates substantially composed of cellulose impregnated with thermosetting resins and/or of articles made of said composite materials arrived at the end of their life cycle.

3. Method according to claim 1 or 2, **characterized in that** said grains have a grain size of up to about 10 mm.

4. Method according to claim 1 or 2 or 3, **characterized in that** at least 70% by weight of the thermoplastic resin is made of recycled resin.

5. Method according to claim 4, **characterized in that** the thermoplastic resin substantially consists of recycled resin only.

6. Method according to any one of the preceding claims, **characterized in that** the thermoplastic resin is a polyolefin or a mixture of polyolefins.

7. Method according to any one of the preceding claims, **characterized in that** inorganic impurities are removed from the grains of composite material before incorporating said grains into the mixture.

8. Method according to any one of the preceding claims, **characterized in that** it also comprises a step of homogenization of said mixture.

9. Thermoformable composite material substantially consisting of thermoplastic resins and decorative plastic laminates, **characterized in that** it is obtained through the method as claimed in any one of the claims from 1 to 8.

10. Composite material according to claim 9, **characterized in that** said decorative plastic laminates comprise decorative plastic laminates arrived at the end of their life cycle and/or scraps and/or residues of manufacturing and/or processing of plastic laminates substantially composed of cellulose impregnated with thermosetting resins.
